# EUROPEAN PATENT SPECIFICATION

(11) **EP 4 541 699 B1**
(45) Date of publication and mention of the grant of the patent: **27.05.2026**
(21) Application number: 24207081.1
(22) Date of filing: 17.10.2024
(51) Int. Cl.: B62H 3/08

(54) **MOBILE STAND**
MOBILER STAND
SUPPORT MOBILE

(30) Priority: 17.10.2023 CZ 20230392
(43) Date of publication of application: 23.04.2025
(73) Proprietor: Unique Ideas s.r.o., 77900 Olomouc (CZ)
(72) Inventor: Vesely, Marek, 77900 Olomouc (CZ); Grigarek, Petr, 78375 Charvaty (CZ)
(74) Representative: Tomickova, Dana

(56) References cited:
- EP-B1- 1 918 183
- CZ-U1- 37 441
- IT-A1- MI20 111 949
- JP-A- 2020 197 077
- JP-A- 2022 177 591
- JP-A- 2023 073 659
- JP-B1- 5 204 920

## Description

### Technical Field

The technical solution relates to a new design of a mobile stand, intended in particular to facilitate parking of vehicles, such as motorcycles, in confined or constricted spaces of a garage or storage rooms.

### Background of the Invention

In order to facilitate parking of motorcycles and other two-wheeled vehicles in garages, workshops, or other storage spaces, while taking up the smallest possible installation space, stands of various designs are often used, both static and mobile stands, which allow the vehicle to be parked efficiently even in narrow spaces, for example close to the side of a car in a garage. Exemplary embodiments of stands include the solutions described in the documents US7150359, US6640979, US6095746, WO2023062321, EP3543199, EP3172083, EP3228424, or EP1773547. Other available and offered solutions are known from publications https://www.condor-lift.com/product/motorcycle-garage-dolly-part-gd-3500/, https://www.blackwidowpro.com/motorcycle/dollies/sport-bike/p/mc-dolly/, https://www.acebikes.com/products/motorcycle-handling/u-turn-motor-mover-xl/, or https://gearsustain.com/best-motorcycle-dollies. A very sophisticated solution of a mobile stand for facilitated parking of motorcycles in constricted spaces is described in the document EP1918183, where the stand includes a movable platform having an elongated shape, defining a substantially horizontal carrying area for a parked motorcycle and provided with at least one ground support. Furthermore, the stand is equipped with an anchoring element that may rest on the ground or be attached to either the carrying platform or to a fastening element that is connected to the ground, wherein the movable platform is connected to the anchoring element at least such that it may substantially rotate about a vertical axis of rotation to vary its orientation about said axis of rotation relative to the anchoring element. However, the overall design of the stand is relatively complex and does not include handlebars to facilitate handling when repositioning the stand.

The object of the new mobile stand solution is to present a new overall simpler design with elements that allow easier braking of the stand, entry thereto, anchoring the vehicle (not only a motorcycle), handling the stand, and exit from the stand. For this purpose, the stand is equipped with, among other things, handlebars to allow easier handling, especially with of an empty platform, a pedal connected to the brakes on the chassis for easier braking and entry, springs for easier exit/extraction of the parked vehicle from the stand.

### Summary of the Technical Solution

The shortcomings of the solutions known from the prior art are to a certain extent eliminated by a mobile stand, suitable for parking vehicles, formed by a carrying platform. The side edges of the platform are shaped upwards in the form of guide bevels. The platform is provided with a frontal supporting pocket in the front part and, at the bottom of the front and rear part thereof, with a front chassis and a rear chassis attached, each of which is provided with a pair of castor wheels rotatably housed about a vertical axis. Furthermore, the carrying platform is provided with a cradle housed removably from above hingedly connected to the carrying platform.

The rear chassis is provided with a swinging pedal brake formed by a footplate connected to vertically downward extending supporting legs.

The stand is thus braked by extending the supporting legs and thus lifting the stand, the wheels get out of contact with the ground, and the stand cannot move on the ground.

The supporting pocket serves in particular to accommodate the front part of the wheel of the placed vehicle. It may take the form of a cover wide open from the rear, where wide means e.g. that the open part is the widest part of the cover, such that the cover tapers or has a constant width from the open wall towards the bottom of the cover (in the radial direction if the cover is preferably curved or bent).

The cradle serves in particular to accommodate the bottom part of the wheel and secure it against rearward movement. Thanks to the hinged fixing, it allows the wheel to be driven over the cradle of the cover, wherein by the crossing the cradle swings over and secures the wheel. The axis of rotation is thus preferably at or below the place of the bend/curvature of the cradle.

The shape of the cradle or cover, the implementation of the hinged connection of the cradle, the shape of the carrying platform, etc. may be implemented differently in different embodiments, as will be apparent to the persons skilled in the art.

Handlebars are preferably frontally attached to the supporting pocket.

Preferably, slot cutouts are formed in the sides of the supporting pocket for possible connection of tying straps.

Preferably, slot cutouts are formed in the upper bases of the front chassis and the rear chassis at the sides thereof for possible connection of tying straps.

The cradle is preferably formed in the shape of a wide open bent cover open from above. Wide means e.g. that the open part is the widest part of the cradle, such that the cradle tapers or has a constant width from the open wall towards the bottom of the cradle (in the radial direction when the cradle is bent). Thanks to the bend, the cradle can have a first part and a second part inclined relative to it, each of which is open for the accommodation of the wheel. Thanks to the hinged nature of the cradle, one or the other part of the cradle can be seated on the carrying platform such that the cradle has two basic positions - in the first one it allows the wheel to enter over the cradle to the cover, in the second one the wheel is on the cradle and it is secured by it from the rear. The cradle swings back over to the first position during the descent of the vehicle from the stand. This swinging over is preferably assisted by a spring, described in more detail below.

Preferably, the cradle has an edge of the bend and is equipped from the bottom below the edge of the bend with a carrying shaft adapted for coupling with the guide bevels of the carrying platform.

Preferably the stand comprises at least one flexible element for pulling the cradle towards the first position thereof, where the force from the flexible element can be adjusted by the positionability of the end of the flexible element. In the first position, the cradle is directed rearwards, in the second one it is directed forwards. The first position is the default position allowing entry of the vehicle wheel. The second position is a fixation position, where the wheel is between the cradle and the cover.

The cradle can thus be pulled rearwards by a spring, preferably by two springs - one on each side. One end of the spring is fixed to the cradle, in particular to the rear end thereof that is the rearmost in the first position and is seated on the area of the carrying platform. The other end of the spring can be fixed in a plurality of places to the carrying platform (either directly or via an additional element). The other end is fixable e.g. to a set of openings in the carrying platform or other profile fixed to the carrying platform. Similarly, the flexible element may be hookable to variously located projections on the carrying platform, etc.

According to the user's requirements, e.g. determined by the weight of the vehicle, it is thus possible to regulate how much the flexible element helps to tip the cradle rearwards into the first position and thus how much the cradle holds the wheel against rearwards movement.

Preferably, two sets of horizontally opposed mirror-situated mounting openings are formed in the guide bevels of the carrying platform, where the first positioning set is implemented centrally of the carrying platform in a nearby region behind the front chassis and the second support set further centrally at a predetermined distance from the front chassis, and the rear marginal part of the cradle is adapted to fix one end of a tension spring, the other end of which is adapted for fixation in the selected pair of mounting openings of the second support set. The mounting openings thus lead from left to right, to the center of the carrying platform.

The first set is particularly intended for hinged fixing of the cradle, which then allows the cradle to be positioned forwards and rearwards.

The mobile stand can also be implemented without the brake described above, with said flexible element for pulling the cradle rearwards, to facilitate the descent of the vehicle from the platform.

The mobile stand, in particular for parking vehicles, is then formed by the carrying platform where: The side edges of the platform are shaped upwards in the form of guide bevels. The platform is provided with the frontal supporting pocket in the front part and the front chassis and the rear chassis attached from the bottom in the frontal and end part thereof, each of which is provided with a pair of castor wheels rotatably housed about a vertical axis. Furthermore, the carrying platform is provided with a cradle housed removably from above hingedly connected to the carrying platform. The stand comprises at least one flexible element for pulling the cradle towards its first position, where the force from the flexible element can be adjusted by the positionability of the end of the flexible element.

This stand may also include handlebars, cutouts for straps, and other optional features relating in particular to the cradle or the cover or the fixing of the flexible elements as described above.

The set object is therefore preferably achieved by a technical solution, which is a mobile stand, in particular for parking vehicles, formed by a carrying platform, the side edges of which are shaped upwards in the form of guide bevels and which is provided with a frontal supporting pocket in the front part. Furthermore, the platform is provided both with a front chassis and a rear chassis attached from the bottom in the frontal and end part thereof, each of which is provided with a pair of castor wheels rotatably housed about a vertical axis, and a cradle housed removably from above, formed in the shape of a wide open bent cover open from above, which is from the bottom below the edge of the bend equipped with a carrying shaft adapted for coupling with the guide bevels of the carrying platform. The essence of the solution is that the rear chassis is provided with a swinging pedal brake formed by a footplate connected to vertically downward extending support legs, wherein two sets of horizontally opposed mirror-situated mounting openings are formed in the guide bevels of the carrying platform, where the first positioning set is implemented centrally of the carrying platform in a nearby region behind the front chassis and the second support set further centrally at a predetermined distance from the front chassis; and the rear marginal part of the cradle is adapted to fix one end of a tension spring, the other end of which is adapted for fixation in the selected pair of mounting openings of the second support set.

In a preferred embodiment, handlebars are frontally attached to the supporting pocket, slot cutouts for possible connection of tying straps are formed in the sides of the supporting pocket and slot cutouts for possible connection of tying straps are formed in the upper bases of the front chassis and the rear chassis at their sides.

The present mobile stand achieves a new better technical and user effect by ensuring a more economically advantageous production with its simpler design, wherein the new shape and arrangement of the functional elements guarantee easier handling of the stand both when parking the motorcycle and during its extraction/exit from the stand. Other advantages are the possibility of adjusting the position of the swing cradle of the front pocket of the stand on the platform for different sizes of the front wheel of the motorcycle and the design of the rear pedal brake ensuring easy braking of the rear chassis and at the same time facilitating the entry of the motorcycle on the platform without needing to lift it.

### Description of Drawings

Specific exemplary embodiments of the technical solution are schematically shown in the accompanying drawings, in which
fig.1 is an axonometric view of the overall embodiment of the stand,

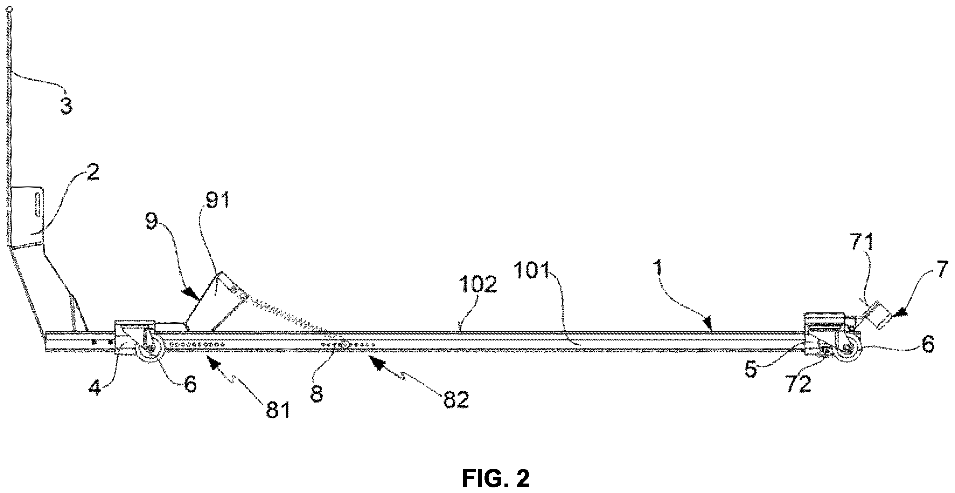

fig. 2 is a side view of the stand of fig. 1,
fig. 3 is an axonometric view of the front part of the stand,

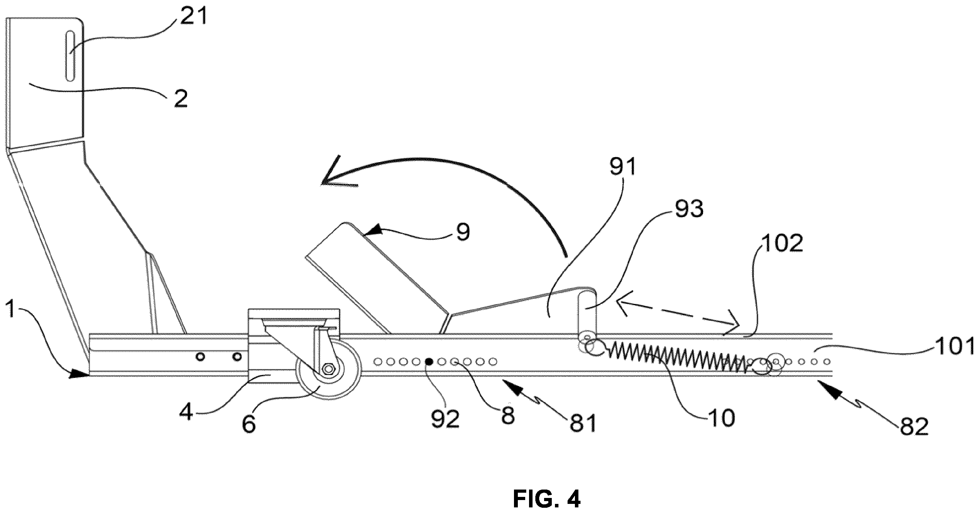

fig. 4 is a side view of the front part of the stand with the cradle reclined,

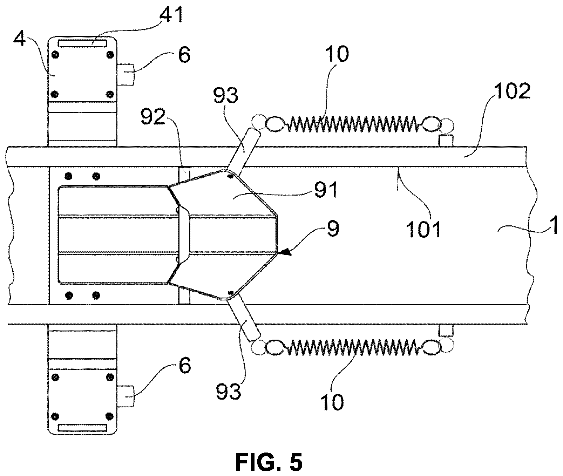

fig. 5 is a top view of the part of the stand of fig. 1 with the cradle in parking position,
fig. 6 is a side view of the front part of the stand with front wheel of a motorcycle,

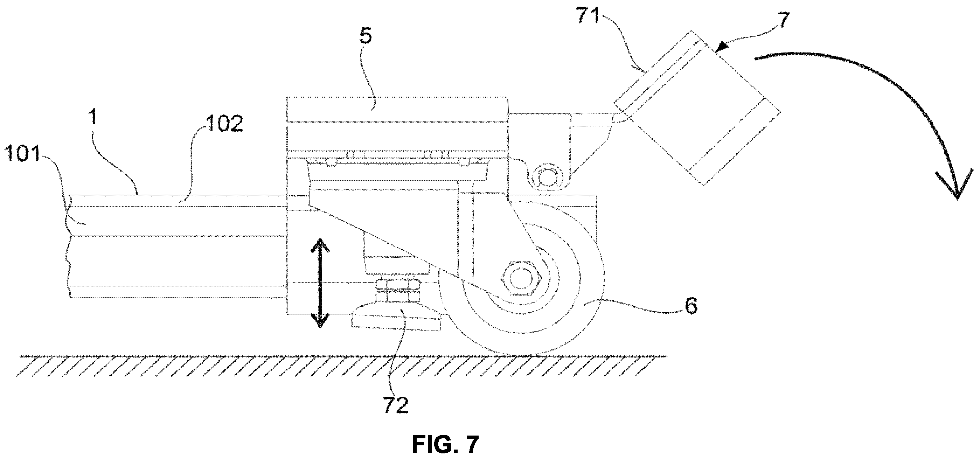

fig. 7 is a side view of the rear part of the stand with the brake released, and

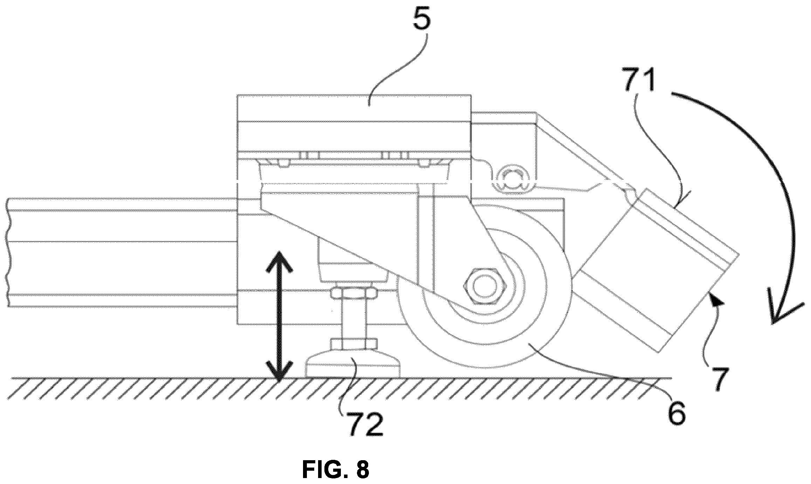

fig. 8 is a side view of the rear part of the stand with the brake locked.

The drawings showing the present technical solution and the subsequently described examples of particular embodiments do not, in any way, limit the scope of protection stated in the definition, instead, they merely clarify the essence of the technical solution.

### Exemplary Embodiments of the Technical Solution

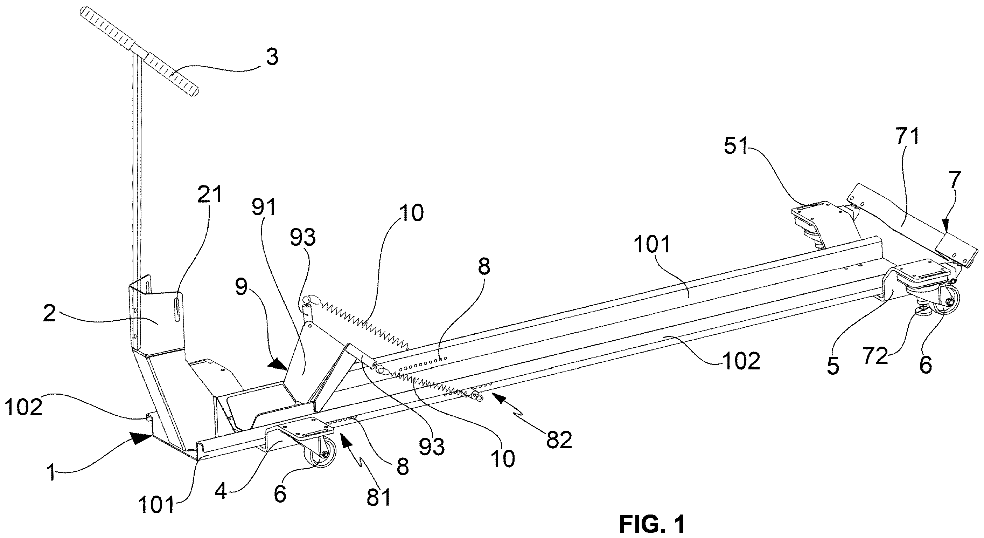

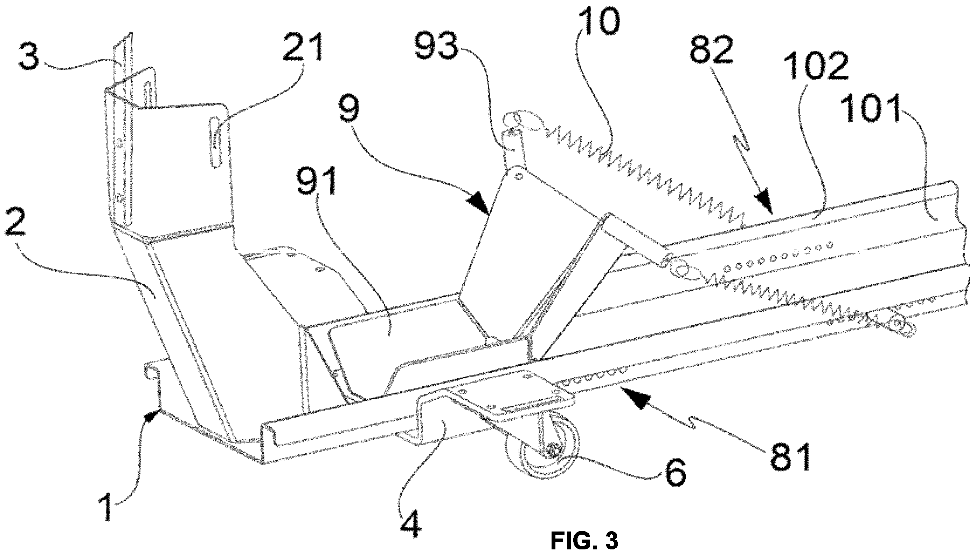

The stand according to the technical solution is formed by an elongated carrying platform 1, preferably in the shape of a rectangular plate, the side edges of which are shaped along the entire length upwards in the form of guide bevels 101 terminated by flanges 102 located towards the outside of the carrying platform 1 such that in cross-section the carrying platform 1 has substantially the shape of a wide letter U, as can be seen in detail in fig. 1 and fig. 3. Attached from above, for example screwed, to the carrying platform 1 at the front frontal edge thereof, is a supporting pocket 2 formed in the shape of a bent trough, to the upper vertically directed part of which handlebars 3 are frontally attached to facilitate the handling of the stand when it is being repositioned to another place. Slot cutouts 21 are formed on the sides of the supporting pocket 2 for possible fixing of not shown tying straps to ensure the stability of the stored motorcycle. The front chassis 4 and the rear chassis 5 are attached to the carrying platform 1 from the bottom in the frontal and end part thereof, each of which is provided with a pair of castor wheels 6 rotatably housed about a vertical axis. The rear chassis 5 is provided with a swinging pedal brake 7 formed by a footplate 71 connected to vertically downward extending supporting legs 72 located in the direction of the longitudinal axis of the carrying platform 1 in front of the castor wheels 6. Slot cutouts 41 and 51 are formed in the upper unmarked bases of the front chassis 4 and the rear chassis 5 at their sides for possible connection of tying straps. Two sets of horizontally opposed mirror-situated mounting openings 8 are formed in the guide bevels 101 of the carrying platform 1, where the first positioning set 81 is implemented centrally of the carrying platform 1 in a nearby region behind the front chassis 4 and the second support set 82 further centrally at a predetermined distance from the front chassis 4 selected according to the intended use of the stand for the particular type of stored vehicle. An integral part of the stand is a removable cradle 9 formed in the shape of a wide open bent cover 91 open from above, which is provided from the bottom below the edge of the bend with a carrying shaft 92 adapted in shape and size to allow insertion into the mounting openings 8 of the first positioning set 81, in the region of which the cradle 9 is installed on the carrying platform 1. The rear marginal part of the cradle 9 is provided with brackets 93 adapted to fix one end of a tension spring 10, the other end of which is adapted for fixation in the selected pair of mounting openings 8 of the second support set 82.

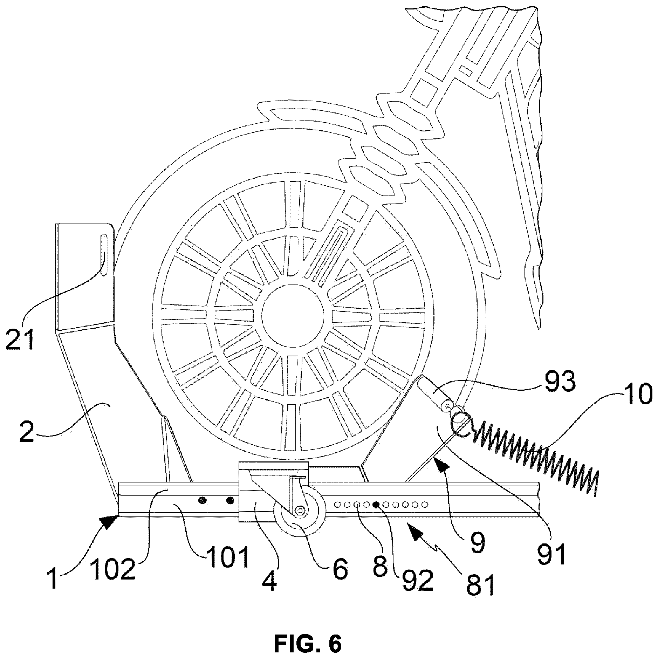

When positioning the motorcycle, the stand is brought to the desired place and the pedal brake 7 is pressed down, whereby the footplate 71 thereof forms a sloping entry ramp and the supporting legs 72 of the rear chassis 5 are extended such that the castor wheels are lifted. Subsequently, the motorcycle is driven onto the carrying platform 1 when the front wheel, after crossing the cradle 9, is supported by the supporting pocket 2 as shown in fig. 6. The motorcycle can then be fixed on the stand by means of the unmarked tying straps fixed both in the cutouts 21 of the supporting pocket 2 and in the slits 41 and 51 of the front chassis 4 and the rear chassis 5. When the pedal brake 7 is released, the stand can be repositioned to the selected place, wherein the rotatably housed castor wheels 6 allow both frontal and side movement.

The embodiment of the stand described and shown in the figures is not the only solution of the of the stand design, since depending on the type and size of the vehicle to be stored, the carrying platform 1, the front supporting pocket 2 as well as the cradle 9 may be shaped differently. Similarly, the design and attachment of the front chassis 4 and the rear chassis 5 to the carrying platform 1 can be implemented by other standard means according to the type and design of the castor wheels 6.

### Industrial Applicability

The mobile stand according to the technical solution is intended in particular to facilitate the parking of motorcycles in confined or constricted spaces of a garage or storage rooms but can also be used for placement of other vehicles such as tricycles or electrically powered scooters.

## Claims

1. A mobile stand for parking vehicles formed by a carrying platform (1)
- the side edges of which are shaped upwards in the form of guide bevels (101)
- provided with a frontal supporting pocket (2) in the front part,
- provided with a rear chassis (5) attached from the bottom in the end part thereof, wherein the rear chassis is provided with a pair of castor wheels (6) rotatably housed about a vertical axis,
- provided with a cradle (9) housed removably from above hingedly connected to the carrying platform (1),
**characterized in that**
a carrying platform (1) is further provided with a front chassis (4) attached from the bottom in the frontal part thereof, wherein the front chassis (4) is provided with a pair of castor wheels (6) rotatably housed about a vertical axis;
and the rear chassis (5) is further provided with a swinging pedal brake (7) formed by a footplate (71) connected to vertically downward extending supporting legs (72) wherein such footplate (71) is suitable for braking the castor wheels (6) of the rear chassis (5) so that after pressing down on the footplate (71) the supporting legs (72) of the rear chassis (5) lift these castor wheels (6) above the ground while simultaneously by pressing down on said footplate (71) a sloping entry ramp is formed from the footplate (71).

2. The mobile stand according to claim 1, **characterized in that** handlebars (3) are frontally attached to the supporting pocket (2).

3. The mobile stand according to claim 1 or 2, **characterized in that** slot cutouts (21) are formed in the sides of the supporting pocket (2) for possible connection of tying straps.

4. The mobile stand according to any one of claims 1 to 3, **characterized in that** slot cutouts (41) and (51) are formed in the upper bases of the front chassis (4) and the rear chassis (5) at their sides for possible connection of tying straps.

5. The mobile stand according to any one of claims 1 to 4, **characterized in that** the cradle (9) is formed in the shape of a wide open bent cover (91) open from above.

6. The mobile stand according to any one of claims 1 to 5, **characterized in that** the cradle (9) has an edge of the bend and is equipped from the bottom below the edge of the bend with a carrying shaft (92) adapted for coupling with the guide bevels (101) of the carrying platform (1).

7. The mobile stand according to any one of claims 1 to 6, **characterized in that** two sets of horizontally opposed mirror-situated mounting openings (8) are formed in the guide bevels (101) of the carrying platform (1), where a first positioning set (81) is implemented centrally of the carrying platform (1) in a nearby region behind the front chassis (4) and a second support set (82) further centrally at a predetermined distance from the front chassis (4), and the rear marginal part of the cradle (9) is adapted for fixing one end of a tension spring (10), the other end of which is adapted for fixation in the selected pair of mounting openings (8) of a second support set (82).

## Patentansprüche

1. Ein mobiler Stand zum Abstellen von Fahrzeugen, gebildet durch eine Tragplattform (1),
- deren Seitenkanten in Form von Führungsschrägen (101) nach oben gebogen sind,
- versehen mit einer vorderen Stütztasche (2) im vorderen Teil,
- versehen mit einem von unten in ihrem Endteil angebrachten hinteren Fahrgestell (5), wobei das hintere Fahrgestell mit einem Paar um eine vertikale Achse drehbar gelagerter Lenkrollen (6) versehen ist,
- versehen mit einer Halterung (9), die von oben abnehmbar gelagert und gelenkig mit der Tragplattform (1) verbunden ist,
**dadurch gekennzeichnet, dass**
eine Tragplattform (1) ferner mit einem vorderen Fahrgestell (4) versehen ist, das von unten in ihrem vorderen Teil angebracht ist, wobei das vordere Fahrgestell (4) mit einem Paar um eine vertikale Achse drehbar gelagerter Lenkrollen (6) versehen ist;
und das hintere Fahrgestell (5) ferner mit einer schwenkbaren Pedal-Bremse (7) versehen ist, die durch eine Fußplatte (71) gebildet ist, die mit vertikal nach unten ragenden Stützbeinen (72) verbunden ist, wobei diese Fußplatte (71) zum Abbremsen der Lenkrollen (6) des hinteren Fahrgestells (5) geeignet ist, so dass nach dem Herunterdrücken der Fußplatte (71) die Stützbeine (72) des hinteren Fahrgestells (5) diese Lenkrollen (6) über den Boden heben, während gleichzeitig durch das Herunterdrücken der genannten Fußplatte (71) eine schräge Auffahrrampe aus der Fußplatte (71) gebildet wird.

2. Der mobile Stand nach Anspruch 1, **dadurch gekennzeichnet, dass** an der Stütztasche (2) vorne Haltegriffe (3) angebracht sind.

3. Der mobile Stand nach Anspruch 1 oder 2, **dadurch gekennzeichnet, dass** an den Seiten der Stütztasche (2) Schlitzausschnitte (21) zur möglichen Verbindung von Spanngurten ausgebildet sind.

4. Der mobile Stand nach einem der Ansprüche 1 bis 3, **dadurch gekennzeichnet, dass** an den oberen Sockeln des vorderen Fahrgestells (4) und des hinteren Fahrgestells (5) an deren Seiten Schlitzausschnitte (41) und (51) zur möglichen Verbindung von Spanngurten ausgebildet sind.

5. Der mobile Stand nach einem der Ansprüche 1 bis 4, **dadurch gekennzeichnet, dass** die Halterung (9) in Form einer weit geöffneten, von oben offenen, gebogenen Abdeckung (91) ausgebildet ist.

6. Der mobile Stand nach einem der Ansprüche 1 bis 5, **dadurch gekennzeichnet, dass** die Halterung (9) eine Biegekante aufweist und von unten unterhalb der Biegekante mit einer Tragwelle (92) ausgestattet ist, die zur Kopplung mit den Führungsschrägen (101) der Tragplattform (1) ausgelegt ist.

7. Der mobile Stand nach einem der Ansprüche 1 bis 6, **dadurch gekennzeichnet, dass** in den Führungsschrägen (101) der Tragplattform (1) zwei Sätze horizontal gegenüberliegender, spiegelbildlich angeordneter Montageöffnungen (8) ausgebildet sind, wo ein erster Positionierungssatz (81) mittig an der Tragplattform (1) in einem nahen Bereich hinter dem vorderen Fahrgestell (4) und ein zweiter Stützsatz (82) weiter mittig in einem vorbestimmten Abstand vom vorderen Fahrgestell (4) ausgeführt ist, und der hintere Randteil der Halterung (9) zur Befestigung eines Endes einer Zugfeder (10) ausgelegt ist, deren anderes Ende zur Befestigung in dem ausgewählten Paar von Montageöffnungen (8) eines zweiten Stützsatzes (82) ausgelegt ist.

## Revendications

1. Un support mobile pour le stationnement de véhicules formé d'une plate-forme de support (1),
- dont les bords latéraux sont façonnés vers le haut sous la forme de chanfreins de guidage (101),
- pourvue d'une poche de support frontale (2) dans la partie avant,
- pourvue d'un châssis arrière (5) fixé depuis le fond dans sa partie d'extrémité, où le châssis arrière est pourvu d'une paire de roulettes (6) montées de manière rotative autour d'un axe vertical,
- pourvue d'un berceau (9) monté de manière amovible par le haut et relié de manière articulée à la plate-forme de support (1),
**caractérisé en ce que**
une plate-forme de support (1) est en outre pourvue d'un châssis avant (4) fixé depuis le fond dans sa partie frontale, où le châssis avant (4) est pourvu d'une paire de roulettes (6) montées de manière rotative autour d'un axe vertical ;
et le châssis arrière (5) est en outre pourvu d'un frein à pédale pivotant (7) formé d'une plaque d'appui (71) reliée à des pieds de support (72) s'étendant verticalement vers le bas, où ladite plaque d'appui (71) est adaptée pour freiner les roulettes (6) du châssis arrière (5) de sorte qu'après avoir appuyé sur la plaque d'appui (71), les pieds de support (72) du châssis arrière (5) soulèvent ces roulettes (6) au-dessus du sol tandis que, simultanément, en appuyant sur ladite plaque d'appui (71), une rampe d'accès inclinée est formée à partir de la plaque d'appui (71).

2. Le support mobile selon la revendication 1, **caractérisé en ce que** des poignées (3) sont fixées frontalement à la poche de support (2).

3. Le support mobile selon la revendication 1 ou 2, **caractérisé en ce que** des découpes en forme de fentes (21) sont formées sur les côtés de la poche de support (2) pour permettre la connexion éventuelle de sangles d'arrimage.

4. Le support mobile selon l'une quelconque des revendications 1 à 3, **caractérisé en ce que** des découpes en forme de fentes (41) et (51) sont formées dans les bases supérieures du châssis avant (4) et du châssis arrière (5) sur leurs côtés pour permettre la connexion de sangles d'arrimage.

5. Le support mobile selon l'une quelconque des revendications 1 à 4, **caractérisé en ce que** le berceau (9) est formé en forme de couvercle courbé (91) largement ouvert, ouvert par le haut.

6. Le support mobile selon l'une quelconque des revendications 1 à 5, **caractérisé en ce que** le berceau (9) présente un bord de courbure et est équipé, depuis le fond sous le bord de courbure, d'un arbre de support (92) adapté pour s'accoupler avec les chanfreins de guidage (101) de la plate-forme de support (1).

7. Le support mobile selon l'une quelconque des revendications 1 à 6, **caractérisé en ce que** deux ensembles d'ouvertures de montage (8) disposées en miroir et opposées horizontalement sont formés dans les chanfreins de guidage (101) de la plate-forme de support (1), où un premier ensemble de positionnement (81) est réalisé au centre de la plate-forme de support (1), dans une zone proche située derrière le châssis avant (4), et un deuxième ensemble de support (82) est situé plus au centre, à une distance prédéterminée du châssis avant (4), et la partie marginale arrière du berceau (9) est adaptée pour fixer une extrémité d'un ressort de traction (10), dont l'autre extrémité est adaptée pour être fixée dans la paire sélectionnée d'ouvertures de montage (8) d'un deuxième ensemble de support (82).
